Europäisches Patentamt

European Patent Office

Office européen des brevets

(19)

(11) Veröffentlichungsnummer: **0 312 756 B1**

(12) # EUROPÄISCHE PATENTSCHRIFT

(45) Veröffentlichungstag der Patentschrift: **27.05.92**

(51) Int. Cl.5: **F16L 33/20**

(21) Anmeldenummer: **88114717.7**

(22) Anmeldetag: **09.09.88**

(54) Schlauchbefestigung an Schlauchstutzen.

(30) Priorität: **10.09.87 DE 3730428**

(43) Veröffentlichungstag der Anmeldung:
**26.04.89 Patentblatt  89/17**

(45) Bekanntmachung des Hinweises auf die
Patenterteilung:
**27.05.92 Patentblatt  92/22**

(84) Benannte Vertragsstaaten:
**AT DE ES FR GB IT SE**

(56) Entgegenhaltungen:
EP-A- 110 102          DE-A- 2 851 965
DE-A- 3 125 351        DE-C- 702 861
FR-A- 1 375 466        GB-A- 2 157 386
US-A- 724 129          US-A- 4 313 629

(73) Patentinhaber: **Continental AG**
**Königsworther Platz 1 Postfach 1 69**
**W-3000 Hannover 1(DE)**

Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Gorski, Ekkehard**
**Brennerstrasse 5**
**W-8012 Ottobrunn(DE)**
Erfinder: **Gieler, Joachim**
**Wieterfeld 16**
**W-3410 Northeim(DE)**
Erfinder: **Keuper, Dieter, Dr.**
**Bronkampring 20**
**W-3355 Kalefeld 5(DE)**

## Beschreibung

Die Erfindung betrifft ein Verzweigungsstück eines Kraftfahrzeug-Kühlwasserschlauches gemäß Patentanspruch 1.

In der Vergangenheit verwendete man zur Schlauchbefestigung an den Schlauchstutzen derartiger Schlauchverzweigungen u.a. unterschiedliche verstellbare Schlauchschellen, die ein kreisförmig gebogenes Metallband aufwiesen, dessen freier Querschnitt mit Hilfe tangential angreifender Spannschrauben auf ein den damit umfaßten Schlauch auf einem Schlauchstutzen festklmenndes Maß verengt werden konnte. Solche Schlauchschellen, die beispielsweise in DE-B-11 79 064, DE-A-20 12 027 und DE-B-22 07 187 dargestellt und beschrieben sind, haben sich zwar wegen ihres verhältnismäßig weiten Verstellbereichs und ihrer universellen Verwendbarkeit bei unterschiedlichen Schlauchbefestigungen - insbesondere auch im privaten Bereich, wie beispielsweise bei Gartenschläuchen u.ä. - in der Vergangenheit durchaus bewährt; sie stellen jedoch wegen ihrer kostspieligen Herstellung aus mehreren Einzelteilen und wegen ihrer umständlichen Handhabung, die sich nur mit großem Aufwand automatisieren läßt, in einer Großserienfertigung von Kraftfahrzeug-Kühlwasserschlauch-Systemen keine optimale Lösung dar.

Mit einem beispielsweise aus der DE-A-32 02 334 bekannten Schlauchschellentyp, der aus einem endlosen, eine offene ösenartige Ausbuchtung aufweisenden Metallband bestand, dessen freier Querschnitt durch Zusammenkneifen dieser Ausbuchtung verengbar war, konnten diese Nachteile zwar teilweise vermieden werden, jedoch haftete diesen Schlauchschellen - ebenso wie den vorstehend erwähnten schraubbetätigten Ausführungsformen - der Nachteil an, daß bei ihnen die Verengung ihres freien Querschnitts im Bereich der besagten Öse - ebenso wie im Bereich der Stellschraube bei dem oben erwähnten Schlauchschellentyp - mit einer Verschiebung des Schellenbandes in Umfangsrichtung und somit einer entsprechenden örtlichen Stauchung der Schlauchwandung verbunden war, die zu Undichtigkeiten führen konnte.

Es sind zwar aus der DE-C-816 466 Schlauchbefestigungen bekannt geworden, die den Schlauch mittels eines zusammengebogenen offenen Ringes hielten, und aus der DE-A-31 25 351 solche, die in Axialrichtung verquetschte Metallringe verwendeten; jedoch wurden diese Befestigungen strengen Dichtigkeitsanforderungen - insbesondere bei pulsierender Belastung - nicht gerecht. Andererseits kamen die bei Hochdruckschlauch-Armaturen bekannten Quetschhülsen, die das auf einen massiven Metallnippel aufgeschobene Schlauchende auf seiner gesamten Länge umfassen, wegen ihres hohen Gewichts sowie ihrer Material- und Fertigungskosten als Alternative zu den herkömmlichen leichten Schlauchschellen nicht in Betracht.

Ferner ist aus GB-A-2 157 386 ein Verzweigungsstück bekannt, bei dem die Schlauchenden durch Ringe auf dem starren Rohrstück angepreßt und von einer geschlossenen Ummantelung umgeben sind.

Doch hat der Fachmann auch diesem Doknment oder dem Doknment US-A-724 129 offenbar keine Anregung entnehmen können, die ihn in die Lage versetzte, ein Verzweigungsstück eines Kraftfahrzeug-Kühlwasserschlauches so zu gestalten, daß es den Anforderungen bezüglich moderner Fertigung und Montage sowie hoher Belastbarkeit im bestimmungsgemäßen praktischen Einsatz genügte.

Es stellte sich daher die Aufgabe, ein Verzweigungsstück eines Kraftfahrzeug-Kühlwasserschlauches aufzuzeigen, das die beschriebenen Nachteile nicht aufweist und das sich durch geringes Gewicht, kostengünstige Herstellung sowie insbesondere durch lange Lebensdauer und hohe - auch impulsartige - Belastbarkeit und durch einfache, großseriengerechte, automatisierbare Montage auszeichnet.

Diese Aufgabe wird gemäß der vorliegenden Erfindung durch ein Kühlwasserschlauch-Verzweigungsstück gelöst, das die im Patentanspruch 1 angegebenen Merkmale aufweist und dessen Schlauchbefestigungs-Stutzen in der Zeichnung schematisch dargestellt ist. Die Unteransprüche beschreiben vorteilhafte Ausgestaltungen des Erfindungsgegenstandes.

Während sich bei herkömmlichen Kühlwasserschläuchen die Vezweigungsstücke häufig als besonders stör- und alterungsgefährdet erwiesen und die schwächste Stelle des Schlauchsystems bildeten, ergaben sich mit erfindungsgemäßen Verzweigungsstücken an den kritischen Anschluß- bzw. Abzweigstellen Platzdruckwerte und defektfreie Druckimpuls-Zyklenzahlen, die denjenigen der Schläuche selbst nicht nachstanden.

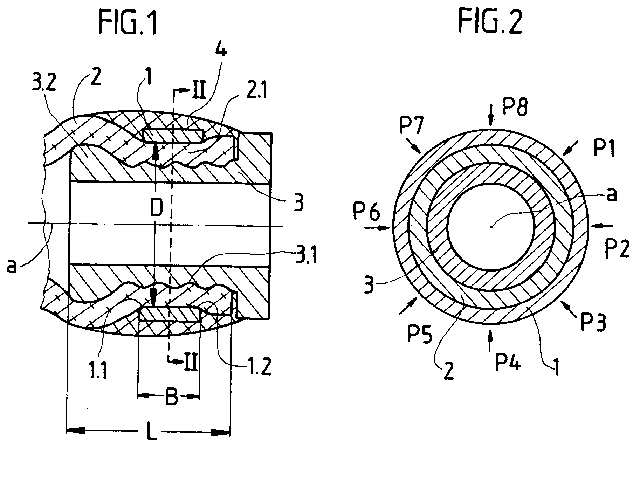

Wie Fig. 1 zeigt, weist die Schlauchbefestigung eines erfindungsgemäßen Verzweigungsstückes einen geschlossenen Metallring 1 auf, der im Bereich seiner Breite B die Schlauchwandung 2.1 ringsum radial gegen die Mantelfläche des Schlauchstutzens 3 preßt, wobei die Preßwirkung - wie in dem in Fig. 2 wiedergegebenen Querschnitt II-II gemäß Fig. 1 durch die Pfeile P1 bis P8 angedeutet ist - durch ringsum gleichmäßige, konzentrisch radial zur Schlauchund Stutzenachse 1 eingeleitete Kaltverformung des Metallringes 1 - beispielsweise mittels nach Art eines Bohrfutters konzentrisch verfahrbarer Klemmbacken - erzeugt ist.

Im Hinblick auf die einerseits aufzuwendenden Verformungskräfte und die andererseits erzielten Flächenpressungen und Dichtwirkungen ist die axiale Breite B des Metallringes nicht größer als 60% der Aufschublänge L des Schlauchendes. An das in das Schlauchinnere hineinragende freie Ende des Schlauchstutzens 3 ist ein Ringwulst 3.2 angeformt, dessen Außendurchmesser etwa gleich dem Innendurchmesser D des kaltverformten Metallringes 1 ist.

Der Metallring 1 und die diesem benachbarten Bereiche der Außenfläche des Schlauches 2 sowie des Schlauchstutzens 3 sind mit einer geschlossenen Ummantelung 4 aus Kautschuk oder thermoplastischem Kunststoff - beispielsweise Polypropylen oder Polyamid - umspritzt. Hierdurch erhält das erfindungsgemäße Verzweigungsstücke eine glatte, gegen mechanische Angriffe unempfindliche Oberfläche, und die Metallringe 1 sind wirksam gegen Korrosion geschützt.

Die Mantelfläche des Schlauchstutzens 3 weist in der dargestellten bevorzugten Ausführungsform der Erfindung ein Dichtlabyrinth aus umlaufenden Ringnuten 3.1 auf, wobei der Metallring sich in axialer Richtung über mindestens zwei Ringnuten erstreckt. Die inneren Stirnkanten 1.1 und 1.2 des Metallringes 1 sind vorzugsweise abgerundet, wodurch an den entsprechenden Stellen des Schlauches eine Kerbwirkung vermieden wird.

In einer besonders hoch beanspruchbaren Ausführungsform der Erfindung ist die Innenfläche der Schlauchwandung 2 - zumindest im Preßbereich des Metallringes 1 - stoffschlüssig haftend mit der Mantelfläche des Schlauchstutzens verbunden. Die Verbindung kann mit einem Klebstoff, insbesondere aber auch durch Vulkanisation erzeugt sein. Die Mantelfläche des Schlauchstutzens ist zweckmäßig - insbesondere dann, wenn der Schlauchstutzen aus einem nicht haftfreudigen Werkstoff, wie beispielsweise Polyamid, besteht - mit einem Haftvermittler vorbehandelt. Der in der erfindungsgemäßen Schlauchbefestigung durch den Metallring 3 erzeugte permanente Anpreßdruck schafft optimale Voraussetzungen für das Zustandekommen und die Aufrechterhaltung einer sicheren Haftverbindung.

**Patentansprüche**

1. Verzweigungsstück eines Kraftfahrzeug-Kühlwasserschlauches mit auf die Anschlußstutzen eines starren Verzweigungsrohrstückes aufgeschobenen Schlauchabschnitten aus Kautschuk oder kautschukähnlichen Kunststoffen, die in einem axialen Bereich ihrer Aufschublänge von Schlauchschellen, deren axiale Breite (B) höchstens 60% der Aufschublänge (L) der Schlauchenden beträgt, umfaßt und radial gegen die Anschlußstutzen gepreßt sind, wobei die Schlauchschellen als geschlossene Metallringe (1) ausgebildet sind, deren Innendurchmesser (D) durch ringsum gleichmäßige, konzentrische radiale Kaltverformung auf ein die Schlauchwandung (2) ringsum radial gegen die Mantelflächen der Schlauchstutzen (3) pressendes Maß verringert ist und die Schlauchstutzen (3) an ihren in das Schlauchinnere hineinragenden freien Enden angeformte Ringwulste (3.2) aufweisen, deren Außendurchmesser etwa gleich dem Innendurchmesser (D) der kaltverformten Metallringe (1) ist, und die Metallringe (1) sowie die ihnen benachbarten Bereiche der Außenfläche der Schlauchenden mit einer geschlossenen Ummantelung (4) aus Kautschuk oder thermoplastischem Kunststoff umspritzt sind.

2. Verzweigungsstück nach Anspruch 1, dadurch gekennzeichnet, daß die Mantelfläche des Schlauchstutzens (3) ein Dichtlabyrinth aus umlaufenden Ringnuten (3.1) aufweist und daß der kaltverformte Metallring (1) sich in axialer Richtung über mindestens zwei Ringnuten (3.1) erstreckt.

3. Verzweigungsstück nach Anspruch 1 oder 2, dadurch gekennzeichnet, daß die radial inneren Stirnkanten (1.1, 1.2) der Metallringe (1) abgerundet sind.

4. Verzweigungsstück nach einem der Ansprüche 1 bis 3, dadurch gekennzeichnet, daß die Innenflächen der Schlauchwandungen (2) zumindest im Preßbereich der Metallringe (1) stoffschlüssig haftend mit den Mantelflächen der Schlauchstutzen (3) verbunden sind.

5. Verzweigungsstück nach einem der Ansprüche 1 bis 4, dadurch gekennzeichnet, daß die Innenflächen der Schlauchwandungen (2) auf die Mantelflächen der Schlauchstutzen (3) aufvulkanisiert sind.

**Claims**

1. Branch piece for a motor vehicle radiator hose, having hose portions formed from rubber or rubber-like plastics materials, which portions are pushed onto the connection-pieces of a rigid, tubular branch piece and surrounded in an axial region of their push-on length by hose clips, the maximum axial width (B) of which is 60 % of the push-on length (L) of the hose ends, and said clips are pressed radially towards the connection-pieces, the hose clips being closed metal rings (1), the internal diameter (D) of which is reduced by all-round uniform, concentric, radial cold-forming to a dimension, which presses the hose wall (2) all-round radially towards the surfaces of the hose connections (3), and the hose connections (3) have annular beads (3.2), which are moulded to fit on their free ends, which protrude into the hose interior, the external diameter of said beads being substantially identical to the internal diameter (D) of the cold-formed metal rings (1), and the metal rings (1) and the regions, adjacent thereto, of the external surface of the hose ends are sprayed with a continuous covering (4) of rubber or thermoplastic plastics material.

2. Branch piece according to claim 1, characterised in that the surface of the hose connection (3) has a sealing labyrinth formed from circumferential annular grooves (3.1), and in that the cold-formed metal ring (1) extends in the axial direction over at least two annular grooves (3.1).

3. Branch piece according to claim 1 or 2, characterised in that the radially internal leading edges (1.1, 1.2) of the metal rings (1) are rounded.

4. Branch piece according to one of claims 1 to 3, characterised in that the internal surfaces of the hose walls (2) are materially and adhesively joined to the surfaces of the hose connections (3), at least in the pressing region of the metal rings (1).

5. Branch piece according to one of claims 1 to 4, characterised in that the internal surfaces of the hose walls (2) are vulcanised onto the surfaces of the hose connections (3).

**Revendications**

1. Raccord pour tuyau souple d'eau de refroidissement de véhicule automobile, avec des tronçons de tuyaux souples en caoutchouc ou matières synthétiques similaires qui sont enfilés sur les embouts de raccordement d'un raccord tubulaire rigide et qui, dans une partie axiale de leur longueur enfilée, sont entourés et pressés radialement contre les embouts de raccordement par des colliers pour tuyaux souples dont la largeur axiale (B) est égale au plus à 60% de la longueur enfilée (L) des extrémités des tuyaux souples, **caractérisé** en ce que les colliers pour tuyaux souples sont réalisés sous forme de bagues métalliques fermées (1), dont le diamètre intérieur (D) est, par une déformation à froid radiale, concentrique et uniforme tout autour des bagues, réduit à une valeur pressant radialement tout autour la paroi (2) des tuyaux souples contre les surfaces extérieures des embouts (3) pour tuyaux souples, **en ce que** les embouts (3) présentent des bourrelets annulaires (3.2), formés à leurs extrémités libres pénétrant à l'intérieur des tuyaux souples et dont le diamètre extérieur est approximativement égal au diamètre intérieur (D) des bagues métalliques (1) déformées à froid**, et en ce que** les bagues métalliques (1), ainsi que les régions qui en sont voisines de la surface extérieure des extrémités des tuyaux souples, sont enrobées, par injection de caoutchouc ou de matière thermoplastique, d'un enrobage fermé (4).

2. Raccord selon la revendication 1, caractérisé en ce que la surface extérieure de l'embout (3) pour tuyau souple présente un labyrinthe d'étanchéité constitué de rainures annulaires entourantes (3.1), et en ce que la bague métallique (1) déformée à froid s'étend, en direction axiale, sur au moins deux rainures annulaires (3.1).

3. Raccord selon la revendication 1 ou 2, caractérisé en ce que les bords frontaux radialement intérieurs (1.1, 1.2) des bagues métalliques (1) sont arrondis.

4. Raccord selon l'une des revendications 1 à 3, caractérisé en ce que les surfaces intérieures des parois (2) des tuyaux souples sont, au moins dans la région de pressage des bagues métalliques, assemblées par adhérence avec liaison de matière aux surfaces extérieures des embouts (3) pour tuyaux souples.

5. Raccord selon l'une des revendications 1 à 4, caractérisé en ce que les surfaces intérieures des parois (2) des tuyaux souples sont vulcanisées sur les surfaces extérieures des embouts (3) pour tuyaux souples.

# FIG.1

# FIG.2